# EUROPEAN PATENT SPECIFICATION

(11) **EP 1 991 456 B1**
(45) Date of publication and mention of the grant of the patent: **15.12.2010**
(21) Application number: 07726537.9
(22) Date of filing: 28.02.2007
(51) Int. Cl.: B62B 7/08

(54) **PUSHCHAIR HAVING AN IMPROVED FOLDING FRAME**
KINDERWAGEN MIT EINEM VERBESSERTEN KLAPPRAHMEN
POUSSETTE COMPORTANT UN CADRE PLIANT AMÉLIORÉ

(30) Priority: 03.03.2006 IT TV20060024
(43) Date of publication of application: 19.11.2008
(73) Proprietor: WIP SRL, 36061 Bassano del Grappa (VI) (IT)
(72) Inventor: PERRI, Edoardo, I-20125 Milano (IT)
(74) Representative: Dragotti, Gianfranco
(86) International application number: PCT/EP2007/051901
(87) International publication number: WO 2007/099121

(56) References cited:
- WO-A-2004/097282
- WO-A-2005/108181
- DE-U1-202005 014 398
- FR-A- 2 164 026
- GB-A- 624 045
- US-A- 5 062 179

## Description

### Filed of the Invention

The present invention refers to a pushchair, or stroller, having a folding wheeled frame.

### Background of the Invention

A pushchair, or stroller, is a light, manually pushed cart that is used to move along, i.e. take for a walk babies and small children in general starting from an age, generally from 4 to 5 months of age, when they are able to keep in a sitting posture. To such purpose, the pushchair comprises a seat that is generally made of textile materials - and is often fitted out with some kind of cowl - and attached - sometimes in a removable manner - to a wheeled frame.

The frame consists of a structure made up - at least prevailingly - of tubular members, e.g. aluminium tubes, and provided with wheels. The tubular members are joined to each other so as to allow the structure to fold and/or collapse in such manner as to reduce to a minimum the volume taken up by the pushchair when it is not being used, e.g. when it is stored at home or is stowed into a car.

Among the various and many embodiments and constructions forming, i.e. making up the state of the art, those disclosed in a couple of patent publications seem in particular worth pointing out and commenting.

Disclosed in the French patent publication no. 2 837 160 there is a pushchair, in which the frame is provided with a middle support tubular member formed of three sections having a successively increasing cross-section and being connected to each other telescopically. The first such section, which terminates in a handlebar for pushing the pushchair and has the narrowest cross-section, is adapted to penetrate, i.e. slide into the second section, which has a larger intermediate cross-section and is in turn adapted to slide into the third section, which has the largest cross-section and is provided - at the bottom end portion thereof - with a first small non-swivelling wheel. On both sides, i.e. the right one and the left one, of the second section there is hinged the first end portion of two linking rods, the second end portion of which is on the contrary hinged on to two further tubular members that carry - at the bottom end portion thereof - respective bearing wheels that are larger than the first wheel, and are situated therebehind, i.e. on the rear of it. Such two further tubular members are arranged at an angle, i.e. slantwise relative to the middle support tubular member, and are secured to the third section of the latter by means of a U-shaped piece, The bearing wheels are connected to each other by means of a rod that is foldable into three parts by pushing down on a central pedal. The frame can be folded in by pushing on the handlebar to thereby causing the first section to slide into the second section, and the second section to in turn slide into the third section of the middle support tubular member, whereas the two further tubular members are caused to retract into the U-shaped piece in such manner as to enable the bearing wheels to draw up beside the small front wheel.

This construction is by all means simple and, owing to its being made up of just a small number of members, is relatively light-weight and low-cost. However, the use of telescopically linked parts and hinges that are free of any protection can in quite short a time lead to jamming or similar occurrences or, anyway, can make folding the frame of the pushchair quite inconvenient as an operation to perform.

The second disclosure worth considering in this connection is the US patent application no. 2U05/U121882, in which the frame of a pushchair comprises two flanks, i.e. a right flank and a left flank, each one of which consists of two slanting legs, i.e. a front and a rear leg, respectively, which extend to converge into a hinge provided to connect them to a respective armrests, such legs being provided with twin-wheels, the front ones of which may also be steering. The frame further includes a front protection bar connecting the side armrests with each other, two cross bars connecting the flanks to each other at the level of the front wheels and the rear wheels, and a handlebar in the shape of a U turned upside down, which has the middle or handgrip portion thereof that extends parallel to the axis of the wheels and the arms thereof that are hinged at the bottom on to the rear legs, as well as to the armrests at an intermediate position thereof.

By actuating a mechanism that comprises two bevel gear pairs and is situated in a central position on a cross member, which may be the handgrip portion of the handlebar or, in a modified embodiment, the cross bar connecting the two pairs of rear wheels with each other), the two flanks are caused to fold about two distinct vertical axes extending perpendicularly to the axis of said cross member. In this manner, the four axes of the corresponding pairs of wheels remain parallel relative to each other, but turn perpendicular relative to the cross member. There is finally provided a lever-actuated mechanism to prevent the two flanks from undesirably turn relative to each other after the frame has been folded.

This construction turns out as being particularly complex, owning in particular to the rather high number of parts involved in both the structure and the folding mechanism, and this most obviously weighs quite heavily down on both the weight and the production cost of the pushchair; furthermore, it is such that the folded pushchair remains anyway rather bulky, still demanding quite considerable a space for it to be stored.

Also known in the art are:
- WO-A-2005/1208181 where is disclosed a stroller (pushchair) according to the preamble of claim 1 with the two rear wheels at the lower end portions of respective arms which are connected by means of separate gear boxes to corresponding side bars of a tubular frame which are parallel to the centre-line plane of the pushchair. There is only one removable and non swivelling front wheel directly supported by the same side bars along the centre-line plane of the pushchair. The rear wheels are connected each other by an axle assembly and the respective arms are connected by a transversal element of the frame so that they move as a unit for folding and unfolding the stroller.
- FR-A-2 164 026 where is disclosed a pushchair with a frame consisting of a plurality of bars, of which one supports a non swivelling front wheel, two support the rear wheels, also non-swivelling and one is the pushing element. A plate positioned below the seat is the point to which all of the bars converge without being interconnected.
- GB-A-624 045 where is disclosed a 3-wheel pushchair with a frame consisting of many bars interconnected by hinging means and connected to a telescopic pushing element arranged in the centre-line plane of the pushchair. The frame is thus folding around the telescopic tube in the manner of an umbrella.
- WO-A-2004/097282 where a frame of a stroller comprises a first bar supporting two pairs of front wheels as well as a second and third bars supporting the rear wjheels. All the bars are mounted onto a central body by connection means having two operative systems. The frame also comprises two pushing bars pivotally connected to said central body and also to a pair of posts supporting the seat of the stroller. Thus the conversion of the stroller from the configuration of regular use to the fully folded or collapsed configuration (and viceversa) requires a plurality of manoeuvres.
- DE-U-20 2005 014 398 where a stroller according to the preamble of claim 1 comprises a pair of swivelling wheels at the front and a pair of non-swivelling wheels at the rear, the wheels of each pair being interconnected by respective transversal bars To permit folding of the frame use is made of spur gear pairs which connect the transversal bars with the longitudinally arranged pushing bars.
- US-A-5 062 179 where the handle, shaped as a down turned U, of a four-wheeled doll carriage is connected through cogged pivoting means to a pair of lateral bars comprised in the frame of the carriage.

### Summary of the Invention

It would therefore be desirable, and is a main object of the present invention, actually, to provide a pushchair that is as simplified as possible in its construction, as far as both the structural and operational parts thereof are concerned, so as to effectively reduce the weight of the pushchair and ensure a high extent of reliability in the use and operation thereof.

Within this general object, it is another main purpose of the present invention to minimize the bulkiness, i.e. the space requirements of the pushchair in its folded, i.e. collapsed state.

A further purpose yet of the present invention is to facilitate handling when folding the pushchair, while of course still ensuring full compliance with safety standards so as to prevent the pushchair from being able to be opened accidentally or in any undesired manner.

According to the present invention, these and further aims are reached in a pushchair that incorporates the features and characteristics as recited in the appended claims.

### Brief Description of the Drawings

Features and advantages of the present invention shall anyway be more readily understood from the description of as preferred, although not sole embodiment that is given below by way of non-limiting example with reference to the accompanying drawings, in which:
- Figure 1 is a three-dimensional side view of the frame of a pushchair according to the present invention, as viewed in the open configuration thereof;
- Figure 2 is a three-dimensional front view of the frame shown in Figure 1, as seen again in the open configuration thereof;
- Figure 2A is a view on a slightly larger scale of some details of one of the tubular members forming the frame;
- Figure 3 is a similar view as the one appearing in Figure 2A, wherein the frame is shown while it is being folded;
- Figure 4 is a partial three-dimensional view of the frame in the closed configuration thereof. i.e. at the end of the folding operation;
- Figure 5 is an enlarged three-dimensional view of the mechanism for folding the frame;
- Figure 6 is a partial three-dimensional view on a further enlarged scale of the device provided to lock the pushchair in its sole configurations of fully open and fully closed frame;
- Figure 7 is an enlarged cross section side view of a mechanism for folding the frame according a further embodiment of the invention;
- Figures 8 and 9 are enlarged three-dimensional view of the mechanism shown in Figure 7.

### Detailed Description of the Preferred Embodiments

For reasons of greater simplicity, the following description is solely referred to the structural parts, i.e. the frame, of the pushchair, as well as the mechanism for folding the same pushchair, since all other parts (seat, cowl, and the like) are basically made in a fully traditional manner.

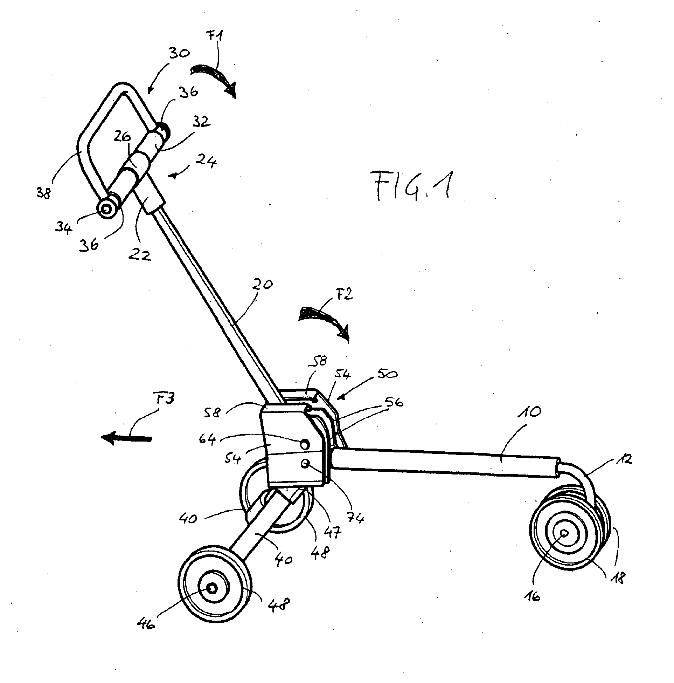

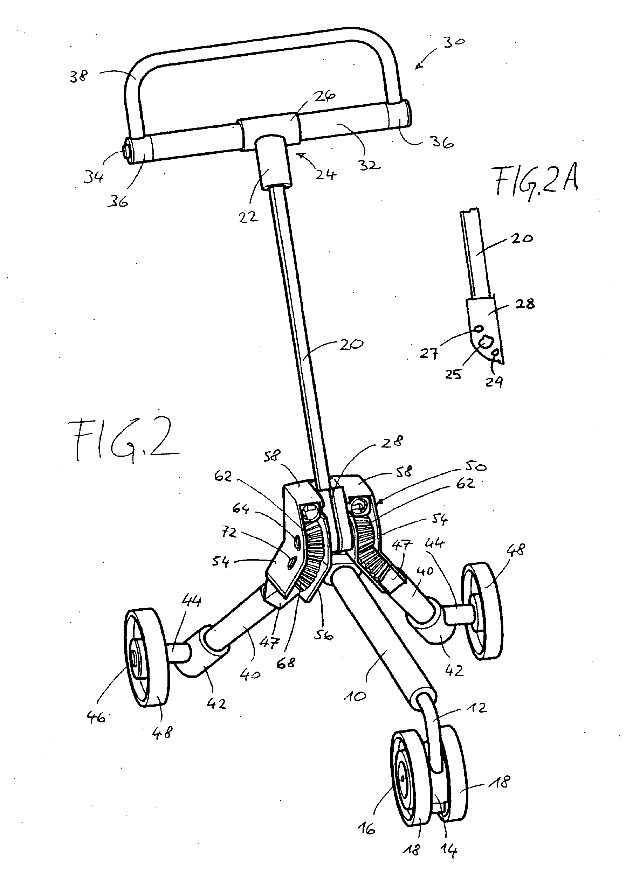

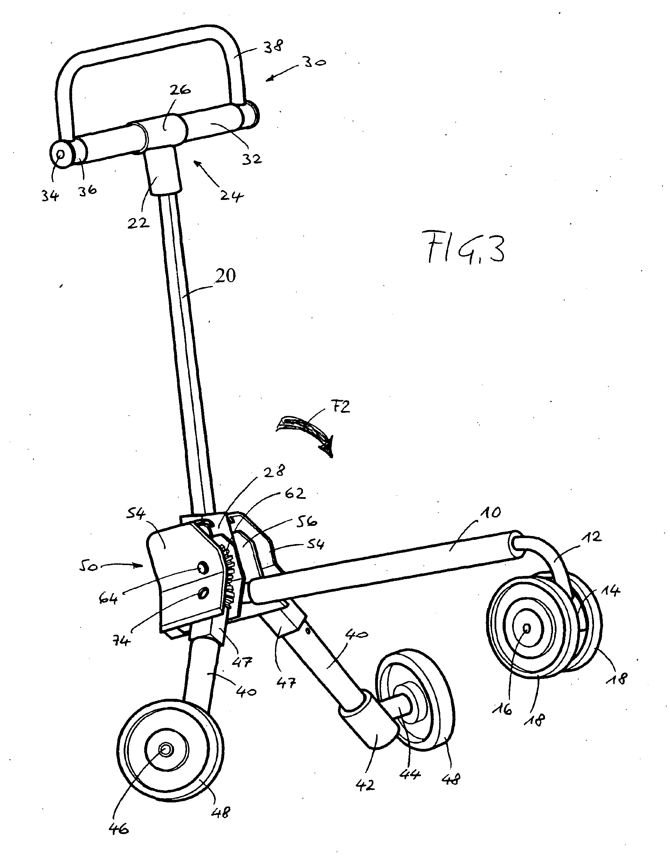

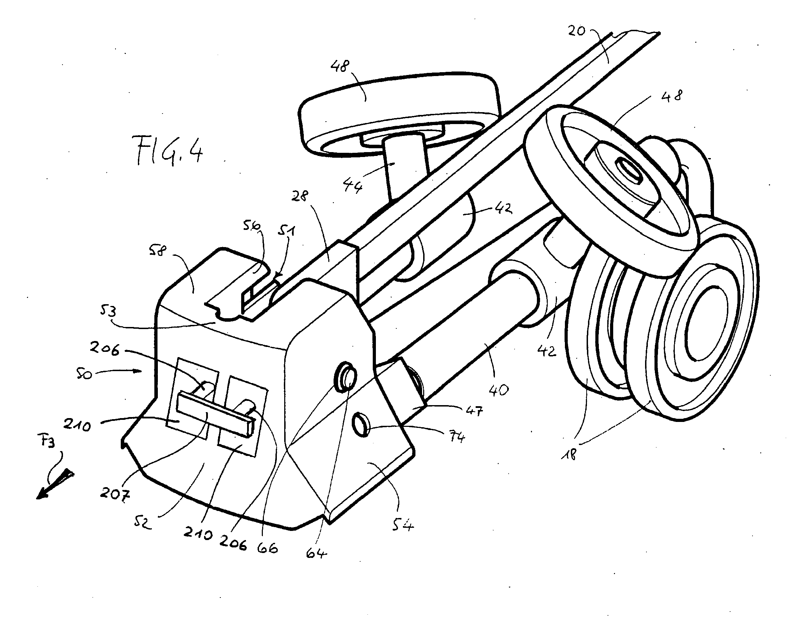

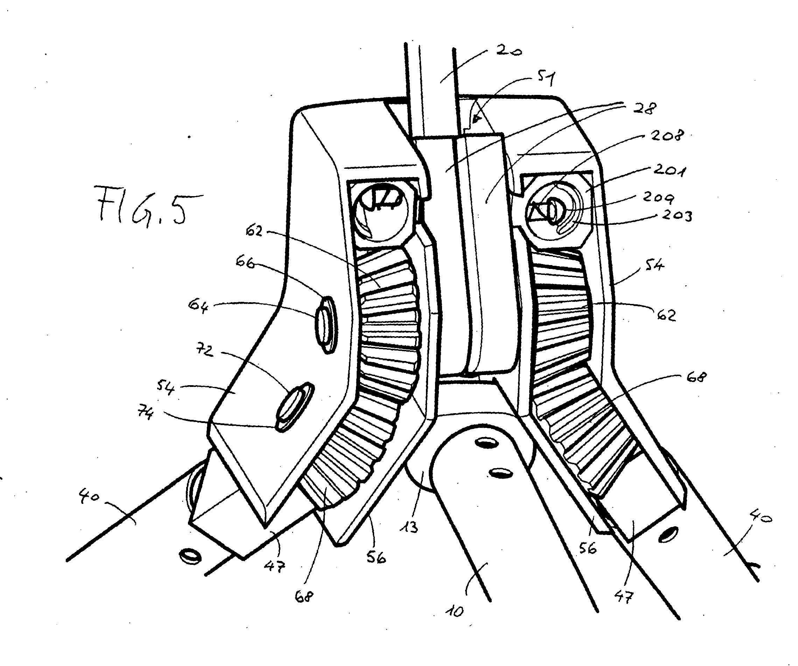

As shown in the Figures, the structure of the frame according to the present invention is basically comprised of following tubular members, preferably made of an aluminium alloy, i.e.:
- a first rectilinear tubular member 10, which shall be referred to as the stationary middle bar hereinafter, and which extends - more or less in a horizontal direction when the pushchair is in its open configuration shown in Figures 1 ands 2 - along the centre-line plane of the pushchair. The front end portion 12 of the stationary middle bar 10 is curved downwards into a L-shaped configuration and - via a bush or bearing (not shown in the Figures for reasons of greater simplicity) placed therebetween - supports a cylindrical enclosure 14 that houses the axle 16 of the two front, preferably steering twin-wheels 18. In this manner, the wheels 18, which constitute the first supporting point of the frame upon the ground, are swivelling. The rear end portion of the stationary middle bar 10 couples by an interference-fit onto the hub 13 and is kept attached thereto in a stable manner by means of retaining members 113 and 114. The hub 113, which has a flattened-out cross-section shape, belongs to the case 50, in which there is accommodated the mechanism for folding the frame, which shall be described further on - see Figure 5;
- a second rectilinear tubular member 20, which extends again along the centre-line plane of the pushchair, and which shall be referred to as the movable middle bar, since it is able to move from a slightly backward inclined arrangement, i.e. an arrangement in which it forms an obtuse angle with the stationary middle bar 10 (open configuration of the frame - see Figures 1 and 2), to an arrangement in which it is folded towards the front wheels 18, i.e. lies substantially parallel to the stationary middle bar 10 (closed configuration of the frame - see Figure 4). The upper end portion of the movable middle bar 20 is forced by an interference fit into the longitudinal arm 22 of a tubular, T-shaped connection 24 that comprises also the cross arm 26. As it shall be described in greater detail below, the T-connection 24 forms the manual pushing point of the pushchair. The bottom end portion of the movable middle bar 20 is enclosed between two shell halves 28, which are also part of the frame folding mechanism described further on. As shown in Figure 2A, there are provided three circular holes in a side-by-side arrangement, the purpose of which shall be explained further on; the middle one 25 of these holes comprises the spline for a key and has a greater diameter than the two holes 27 and 29 at the sides thereof;
- a handlebar, as generally indicated at 30, which first of all comprises a. rectilinear tube member 32, the middle zone of which is accommodated in the cross arm 26 of the T-shaped tubular connection 24. The end portions of the tube member 32 accommodate two hubs, only one of which is visible in the Figures, where it is indicated at 34; these two hubs support two bushes 36, to which there are welded the free ends of a U-shaped tubular member or bar 38 forming the handgrip of the handlebar 30, by means of which the pushchair is pushed and steered. Alternatively, the handlebar may be provided with a bearing or a bushing to be placed between the middle portion of the tube 32 and the cross arm 26 of the T-shaped fitting 24, while the free ends of the handgrip 38 may be welded directly on to the end portions of the same tube 32. In both cases, the handlebar 30 can anyway be folded forwards, about an axis that is perpendicular to the axis of the movable, middle bar 20, until the middle portion of the handgrip 38 comes practically into resting against the same bar 20 at the end of the frame folding operation. Obviously enough, in the handlebar 30 there are in all cases provided manually releasable locking means of a kind as is generally known as such in the art (e.g., a ratchet-and-pawl arrangement), which are adapted to prevent the pushchair from undesirably overturning, i.e. accidentally folding as it is being used, i.e. when the frame is in its fully open state;
- two further rectilinear tubular members 40, which shall be referred to as the rear bars hereinafter, and which are slanting, i.e. set obliquely relative to both the centre-line plane and the stationary middle bar 10, i.e. are diverging and turned backwards when the frame of the pushchair is in its open configuration - see Figures 1 and 2. To the bottom end portions of the rear bars 40 there are attached two short tubes 42, each one of which is welded laterally to an end of a respective bush 44 that protrudes outwards perpendicularly to the centre-line plane. The two bushes 44 are co-axial and support the axles of the rear wheels 48, which in turn constitute the two further supporting points of the frame on the ground. Only one of such axles is visible in the Figures, where it is indicated at 46 - see Figures 2 and 3. The upper end portions of the rear bars 40 comprise prismatic blocks 47 that are a part of the frame folding mechanism - see Figures 2 and 5.

According to a basic feature of the present invention, the frame folding mechanism, as will be now described in greater detail, is therefore situated in a position, into which there are converging the rear end portion of the stationary middle bar 10, the lower or bottom end portion of the movable middle bar 20, and the upper end portions 47 of the rear bars 40. The parts that make up such mechanism are identical, although reversed in a mirror-like manner, on both sides of the centre-line plane of the pushchair, and are enclosed in a case (e.g., of die-cast aluminium or an injection-moulded engineering polymer) that is generally indicated at 50 in the Figures and is symmetrically shaped relative to the same centre-line plane.

The case 50 comprises a set of walls that are bent into a dihedral shape (so that the upper edge thereof is vertical, whereas the lower edge thereof is bent towards the outside of the frame), i.e. a rear wall 52, two outer side walls 54, and two inner side walls 56 extending parallel to the outer side walls as duly spaced therefrom. The lower edges of the two inner walls 56 are welded on to the aforementioned hub 13, which couples, to the rear end portion of the stationary middle bar 10.

Each one of said pairs of outer and inner side walls 54 and 56, respectively, is joined to the rear wall 52, as well as to a top cover 58 in such manner that a gap or interruption 51 remains in the case 50 astride of the centre-line plane and starting from the front edge of the side walls, while on the rear of such gap 51 the covers 58 are however joined to each other by the ridge 53 - see Figures 4 and 5.

It can be noticed that the ridge 53 is the detent that prevents the movable middle bar 20 from turning, i.e. folding backwards, and that the rear wall 52 is the detent that prevents the rear bars 40 from diverging from each other to any excessive extent.

The above-cited gap accommodates the two aforementioned shell halves 28 that enclose the lower end portion of the movable middle bar 20.

Each one of said pairs of outer and inner side walls 54 and 56, respectively, defines, on the right and left side of the centre-line plane, an upper compartment and a lower compartment, wherein these compartments join each other at the bending line of the same side walls, and are open on the front side thereof.

The above-cited compartments provide the accommodations adapted to receive four gears coupled to each other so as to form a bevel gear pair on each side of the centre-line plane of the pushchair. These two bevel gear pairs include first gears 62 and second gears 68 meshing, i.e. engaging each other.

The first gears 62 are accommodated in the upper compartments of the case 50, and are mounted on a single shaft 64, the axis of which is horizontal and, therefore, perpendicular to the centre-line plane, wherein said shaft is retained by means of a key (not shown) in the middle, larger-diameter hole 25 that is provided in the two shell halves 28 in which the lower end portion of the movable middle bar 20 is enclosed - see Figure 2A. At the four side walls 54 and 56, the shaft 64 is supported by four respective bushings 66, only one of which is shown in Figures 4 and 5, actually.

In turn, the second gears 68 of said bevel gear pairs being housed in the lower compartments of the case 50 are characterized in that they feature a circumferential interruption provided to enable them to be rigidly joined (e.g., welded) to the prismatic blocks 47 forming the upper end portions of the rear bars 40.

The gears 68 are mounted on to respective shafts, only one of which is shown in the Figures 2 and 5, where it is indicated at 72; these shafts are in turn supported by two respective bushings - as the bushing indicated at 74 in Figure 5 - at the lower sides of the respective outer and inner side walls 54 and 56. The axes of the shafts 72, which extend perpendicularly to the rear bars 40, cross each other at a point lying on the centre-line plane of the pushchair and, preferably, lying also on the axis of the stationary middle bar 10.

According to the present invention, the pushchair can solely be folded out into the configuration illustrated in Figure 1, in which the frame is fully open, and folded in into the configuration illustrated in Figure 4, in which the frame is on the contrary fully closed, thanks to the provision of a locking device that is generally indicated at 200 in the Figures. As in the afore-described folding mechanism, also the parts that make up such locking device are identical, although reversed in a mirror-like manner, and placed on both sides of the centre-line plane of the pushchair in correspondence to the two shell halves 28 of the movable middle bar 20.

Each such part comprises a hollow case 201 in the shape of a prism having a totally closed rear base 210 and, thereinside, a pushing member 203 formed of a cylindrical middle body 204, an inclined plane 205 that extends in the front portion of the cylindrical body 204, and an actuation pin 206.

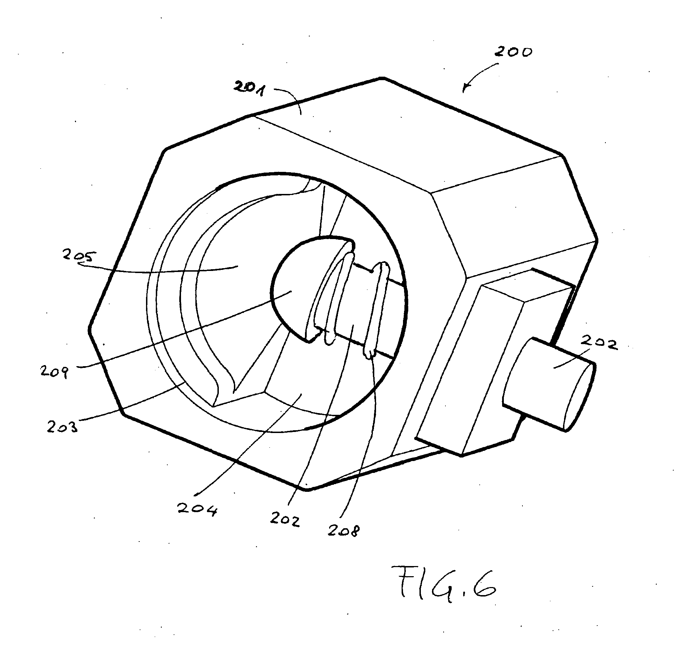

The inclined plane 205 is slidably engaged by the hemispherical head 209 provided on the inner end portion of a movable cylindrical pin 202 associated to a compression spring 208 wound round the portion of said movable pin that lies inside the case 201. The hemispherical shape of the head 209 ensures that the contact friction generated by the movable pin sliding upon the inclined plane 205 is reduced to a minimum - see Figure 6.

The actuation pin 206 extends in the rear portion of the same cylindrical body and protrudes from the closing base 210. On the side where the actuation pin 206 is extending, the pushing member 203 is associated to a spring (not shown in the Figures) that has its supporting plane exactly on the closing base 210 of the case 201. The two actuation pins 206 of the two respective cases 201 are connected to each other by means of a rigid member forming a kind of handgrip 207 protruding from the rear wall 52 of the case 50 - see Figure 4.

The operation required to fold the frame is performed in a particularly simple and effortless manner, by taking first care of locking the forward movement of the pushchair, wherein this can be most simply be done by stopping the front twin-wheels 18, e.g. by putting a foot across them as a peg. All it in fact takes for the frame to be folded is to have the locking means of the handlebar 30 released so that, by pushing on the handgrip 38, the latter turns forwards, along the centre-line plane, about the tube 32, as indicated by the arrow F1 in Figure 1. At the same time, or immediately thereafter, also the movable middle bar 20 is pushed forwards, as indicated by the arrow F2 in Figures 1 and 3.

Owing to the two shell halves being firmly joined to the shaft 64 of the upper gears 62 of the bevel gear pairs, pushing the movable middle bar 20 forwards causes the lower gears 68 of said bevel gear pairs to rotate, and this again causes the prismatic blocks 47 to rotate accordingly, along with the rear bars 40 and the related wheels 48. Thanks to this rotation, which takes place both forwards and towards the centre-line plane, the rear bars 40 come into lying substantially parallel to the stationary middle bar 10, wherein it can be most readily appreciated that, by rotating along the centre-line plane in the direction indicated by the arrow F2, even the movable middle bar 20 eventually comes into lying substantially parallel to the same stationary middle bar 10.

When the frame of the pushchair is eventually folded and closed, releasing the handgrip 207 causes the two cylindrical bodies 204 - as pushed by their own spring (not shown) - to perform a co-axial movement relative to the respective cases 201, thereby pushing forwards the inclined planes 205 that are firmly joined to the same cylindrical bodies 204. This movement also causes the movable pins 202 to be pushed outwards to be received into one of the smaller-diameter holes that are provided in each one of said shell halves 28, i.e. the holes 29, so as to lock the frame in its fully folded, i.e. collapsed configuration. In such closed configuration thereof, the pushchair is therefore really compact, i.e. closely packed together-as this is clearly shown in Figure 4.

To restore the pushchair into the open, i.e. unfolded configuration thereof, a traction is exerted to pull the handgrip 207 along the directrix running parallel to the axis of the rectilinear tubular member 10, however in a direction that is opposite to the direction in which the pushchair is normally pushed, as indicated by the arrow F3 - see Figures 1 and 4. In this manner, an axial movement relative to the cases 201 is imparted to the two cylindrical bodies 204 via the two actuation pins 206, which causes the inclined planes 205, firmly joined to the respective cylindrical bodies 204, to move backwards. Under the pushing force exerted by the respective springs 208 associated thereto, the movable pins 202 move in turn backwards into their own case 201 and out of the holes 29 in which they were received.

When the handgrip 38 is then imparted a rotary movement in the direction opposite to the one indicated by the arrow F2, the movable middle bar 20 causes the rear bars 40 to move away from the stationary middle bar 10. By releasing the handle 207, the cylindrical pins 202 are pushed towards the outside of the cases 201, thereby moving into the respective receptacles thereof, which are constituted by the other smaller-diameter holes 27 provided in the two shell halves 28 of the movable middle bar 20, and getting engaged therein. In this manner, the movable middle bar 20 and, as a result, the rear bars 40 remain locked in the fully open configuration of the pushchair, which is illustrated in Figures 1 to 3..

Any other locking position of the movable middle bar 20 and, as a result any other configuration of the pushchair differing from the ones corresponding to a fully closed and a fully open frame, are not possible since only two receptacles 27 and 29 are provided in each one of the shell halves 28 for the cylindrical pins 202 to engage in.

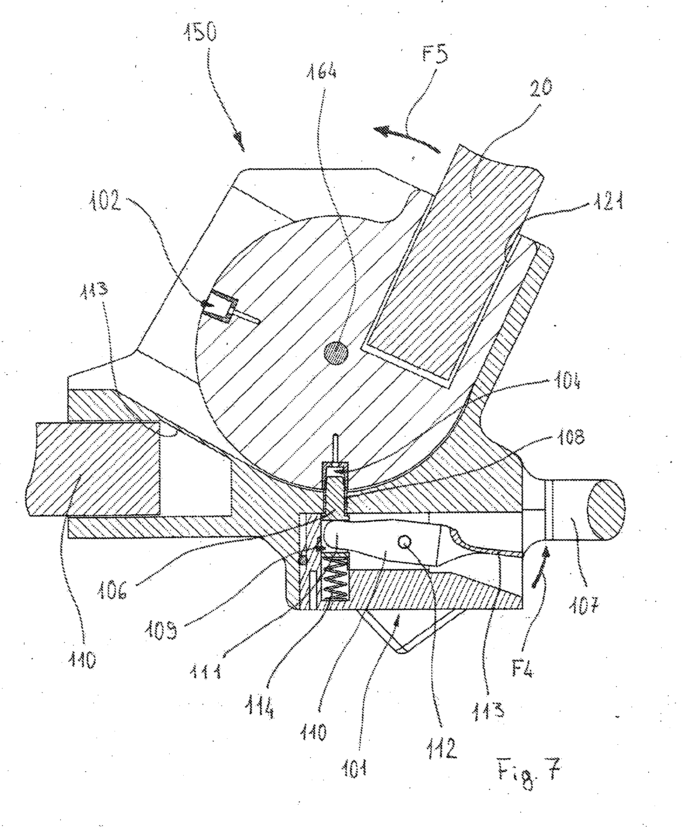

Figures 7, 8, 9 show another embodiment: of the invention wherein parts identical to those of the preceding embodiment have the same reference numbers. In particular such embodiment regards the frame folding mechanism.

A case 50 includes a substantially cylindrical body 128 rotable about a pin 164 and having a cavity 121 in which the end of the movable middle bar 20 is rigidly engaged. The axis of the bar 20 extends perpendicularly to the rotation axis of the cylindrical body 128, i.e. the axis of the pin 164.

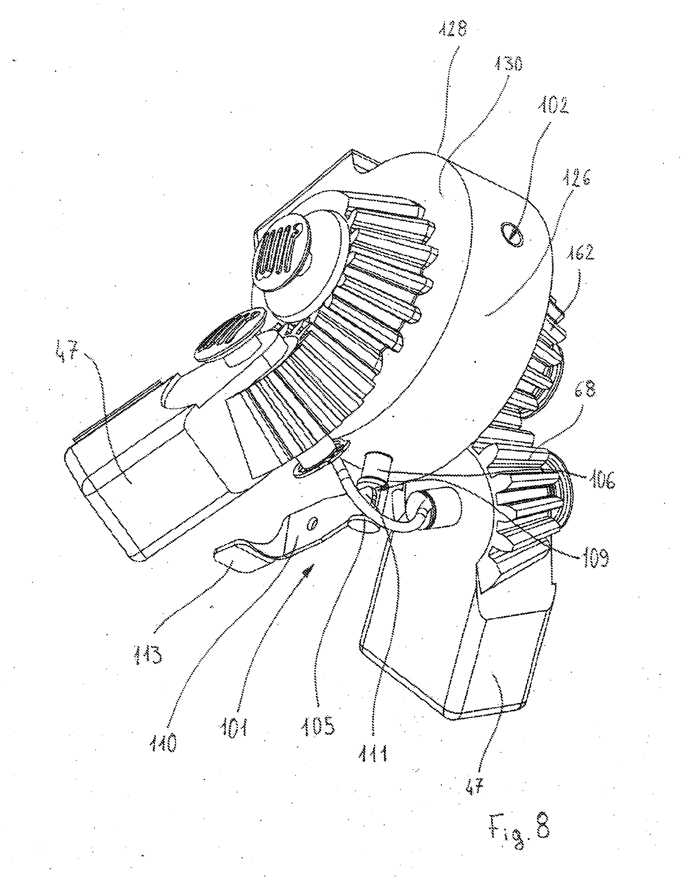

Two bevel gears 162, which are placed symmetrically with respect to the previously defined centre-line plane, extend from the bases 130 (only one of which is shown in figure 8) of the cylindrical body 128. Each gear 162 engages with a respective bevel gear 68, which is rigidly joined to a rear bar 40 through a prismatic block 47 (see figure 8). The four gears 68, 162 form two bevel gear pairs which permit the rear bars 40 and the movable middle bar 20 to move as in the first embodiment.

Besides, on the lateral surface 126 of the cylindrical body 128 there are two radial holes 102, 104 whose axes are angularly spaced and extend on the centre-line plane of the pushchair, as shown in figure 7. Such holes 102, 104 cooperate with a triggered locking-device, that is generally indicated at 101. The locking-device 101 comprises a movable pin 106, sliding into a seat 108 provided in a wall of the case 150. The cylindrical end of the pin 106 is adapted to be inserted in one of the two holes 102, 104, so that the rotation of the cylindrical body 128, and hence the rotation of the movable middle bar 20, can be selectively locked in the fully-open frame configuration (pin 106 into hole 102) or in the fully-closed frame configuration (pin 106 into hole 104).

Besides, the pin 106 comprises an enlarged head 105, in which a seat 109 is provided for receiving the first end 111 of a lever 110 pivoting about a pin 112 on the case 150 (which is not shown in figure 8 for clarity). By operating on the second end 113 of the lever 110 it is possible to push the pin 106 so that its cylindrical end may be pivoted into the cylindrical body 128 or not. In particular, by operating on the second end 113 of the lever 110 according to the arrow F4 (figure 7), the cylindrical end of the pin 106 is caused to come out of the hole 102, 104 in which it is inserted, thereby allowing the rotation of the cylindrical body 128 around its pin 164.

A spring 114, or other convenient elastic means, assures that the pin 106 is firmly inserted into one of the holes 102, 104. In this way, in order to close or open the pushchair frame, an intentional operation on the second end 113 of the lever 110 is needed.

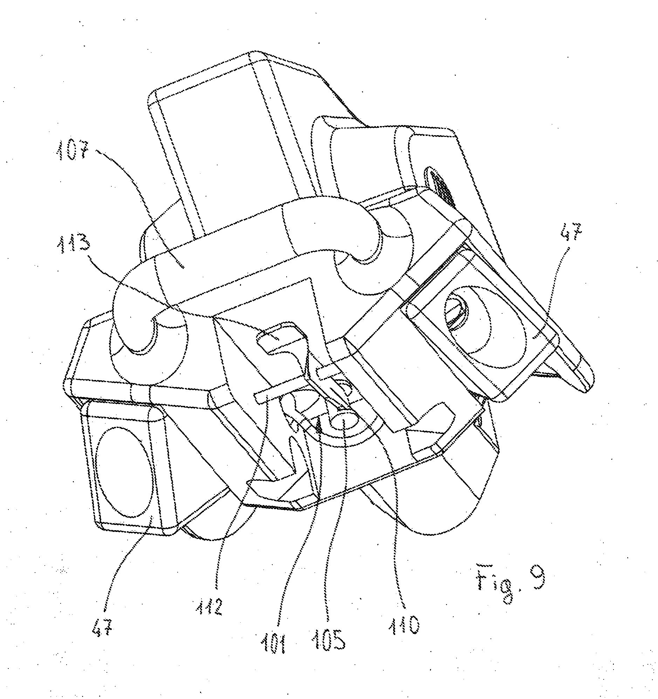

A handle 107 placed on the rear part of the case 150 (see figure 9) permits to easily catch the pushchair when the latter is in closed configuration, and it makes easier to perform the closing and opening operations. In other words the user may grasp the handle 107 with one hand and move the lever 110 with a finger of the same hand according to the direction of arrow F4, thereby letting the pin 106 come out from the hole in which it is inserted. With the other hand the user moves the movable middle bar 20 according to the direction of arrow F5 or in the opposite one, in order to set the pushchair frame respectively in the closed or open configuration (see figure 7).

As in the preceding embodiment, in this variant any other locking positions of the movable middle bar 20 (and as a result any other configuration of the pushchair differing from the fully-closed and fully-open frame configuration as well) are not possible, since in the cylindrical body 128 there are only two holes 102, 104 wherein the pin 106 can be inserted into.

The main advantages offered by the present invention may be summarized as follows:
- the pushchair is comprised of a rather small number of both structural (i.e. pertaining to the frame) and operative parts, so that it is light-weight and simple to manufacture;
- the operations required to fold and unfold the frame, i.e. to change the configuration of the pushchair, can be performed in a most convenient and easy manner;
- a high extent of reliability is achieved, since - for the pushchair to change from a configuration to the other one - the parts forming the frame are required to solely perform angular movements, which are inherently more controllable and less subject to jamming and similar occurrences than the sliding movements that characterize for instance the frame disclosed in the French patent no. 2 837 160 discussed earlier hereinbefore.

Those skilled in the art will be fully able to readily appreciate that - although it has been described with particular reference to preferred embodiments thereof - the present invention may be developed and embodied in a number of different manners without departing from the scope defined by the appended claims.

## Claims

1. Pushchair comprising a frame that is convertible from a fully open configuration for regular use to a fully folded configuration for storage when not in use, wherein said frame comprises :
• a first bar (10) lying on and extending along the centre-line plane of the pushchair, a first end portion (12) of the first bar (19) being provided with a front supporting point (18) of the pushchair;
• a pair of rear bars (40) comprising an upper and a lower end portion (47, 42), the bars being
- diverging backwards from opposite sides of the longitudinal centre-line plane of the pushchair when in the configuration of regular use,
- adapted to displace angularly relative to said first bar (10) to move forward when the frame is folded,
- provided at the respective lower end portions (42) with rear supporting points (48) for the pushchair;
• a second bar (20) lying on and extending along the longitudinal centre-line plane of the pushchair and featuring
- a pushchair pushing point (24) at a first end portion of said second bar (20) and
- connection means with said rear bars (40) at a second end portion (28),
**characterized in that**:
• at the said second end portion (28) of said second bar said second bar (20) is pivotally mounted on to a shaft (64) perpendicular to the longitudinal centre-line plane, the said shaft actuating a pair of bevel gears (62, 68) which are the connection means of said second bar with the rear bars (40) and at the same time the only mutual connection of the same rear bars at their upper end portions (47) so that an angular displacement forwards of said second bar (20) relative to said first bar (10) along the longitudinal centre-line plane and around said shaft (64) also causes the rear bars (40) to rotate both forwards and towards the centre-line plane, so as to be folded parallel to the first bar.

2. Pushchair according to claim 1, wherein the front supporting point provided for the pushchair to rest on the ground is an either simple or a twin wheel (18) carried by said first bar (10).

3. Pushchair according to claim 2, wherein said simple or twin wheel (18) is swivelling.

4. Pushchair according to claim 1, wherein each of the rear supporting points provided for the pushchair to rest on the ground are either simple or a twin wheel (48), which share the same axis when the pushchair is in the configuration of regular use.

5. Pushchair according to claim 1, wherein the pushchair pushing point provided on said second bar (20) consists of a pipe connection (24) coupled to a rectilinear tube (32) that is a part of a handlebar (30), the handlebar being tiltable forwards about an axis extending perpendicularly to longitudinal centre-line plane of the pushchair when the frame is not in the fully open configuration thereof.

6. Pushchair according to claim 1, wherein each of said bevel gear pairs comprises
- a first gear (62) mounted on said shaft (64) that allows the angular displacement of said second movable bar (20), and
- a second gear (68) mounted on a second shaft (72) extending perpendicular to the rear bars (40) which is rigidly attached to the upper end portion (47) of said rear bars (40)
so that the axes of the second shafts (72) of said second gears (68) cross each other at a point lying on the centre-line plane of the pushchair below the shaft (64) of the first gears (62) along said stationary middle bar (10).

7. Pushchair according to claim 1, **characterized by** comprising a locking device (101; 200) arranged to prevent the frame from taking any different configuration other than the fully open and the fully closed configurations thereof.

8. Pushchair according to claim 7, wherein said locking device (101; 200) comprises parts that are identical, although reversed in a mirror-like manner on both sides of the centre-line plane of the frame.

9. Pushchair according to claim 8, wherein, on each side of the centre-line plane of the frame, said locking device comprises:
• a hollow case (201),
• a sliding pin (202) having a first portion thereof associated to a biasing spring and a hemispherical head (209) abutting against an inclined plane (205) inside said hollow case (201), and a second portion thereof that protrudes from the same hollow case (201) and is adapted to selectively engage into cross-holes (27, 29) that are provided at the end portion (28) of said second movable bar (20) that lies opposite to the one carrying the pushing point (24) of the pushchair, at both sides of a hole (25) provided for the shaft (64) of said same second movable bar (20) to be able to engage thereinto.

10. Pushchair according to claim 9, wherein said locking device is arranged to be released manually, when the frame is folded into the fully closed configuration thereof, by actuating a retractable-handle member (207) in a direction that is opposite to the direction in which the pushchair is pushed when in regular use.

11. Pushchair according to claim 7, wherein that said locking device (101) comprises a locking element (106) selectively insertable into seats (102, 104) provided in a rotating body (128) which pivots inside a case (150) and is firmly engaged with the second bar (20).

12. Pushchair according to claim 11, wherein that said locking element (106) is a pin engaged with a lever (110) pivoting inside the case (150), mounted so that a rotation of the lever (110) results in a shifting of the pin (106).

13. Pushchair according to claim 12, **characterized by** comprising elastic means for pushing the pin (106) so as to oppose its disengagement from one of the two seats (102, 104).

14. Pushchair according to one of the preceding claims, wherein all said bars (10, 20, 30, 40) are comprised of rectilinear tubular members, preferably of an aluminium alloy.

## Patentansprüche

1. Kinderwagen mit einem Rahmen, der von einer vollständig offenen Konfiguration zum regulären Gebrauch zu einer vollständig gefalteten Konfiguration zum Aufbewahren wandelbar ist, wenn er nicht in Gebrauch ist, wobei der Rahmen Folgendes aufweist:
■ einen ersten Stab (10), der an der Mittelachsenebene des Kinderwagens liegt und sich darin erstreckt, wobei ein erster Endabschnitt (12) des ersten Stabs (19) mit einem vorderen Stützpunkt (18) des Kinderwagens versehen ist;
■ ein Paar hintere Stäbe (40), die einen oberen und einen unteren Endabschnitt (47, 42) aufweisen, wobei die Stäbe
- von gegenüberliegenden Seiten der sich längs erstreckenden Mittelachsenebene des Kinderwagens nach hinten auseinandergehen, wenn dieser in der Konfiguration des regulären Gebrauches ist,
- dazu geeignet sind, sich relativ zu dem ersten Stab (10) in einen Winkel zu versetzen, um sich nach vorn zu bewegen, wenn der Rahmen gefaltet wird,
- an den jeweiligen unteren Endabschnitten (42) mit hinteren Stützpunkten (48) für den Kinderwagen versehen sind;
■ einen zweiten Stab (20), der an der sich längs erstreckenden Mittelachsenebene des Kinderwagens liegt und sich darin erstreckt und ausgezeichnet ist durch
- einen Kinderwagenschubpunkt (24) an einem ersten Endabschnitt des zweiten Stabs (20), und
- eine Verbindungseinrichtung mit den hinteren Stäben (40) an einem zweiten Endabschnitt (28),
**dadurch gekennzeichnet, dass**:
- an dem zweiten Endabschnitt (28) des zweiten Stabs der zweite Stab (20) an einer Welle (64) schwenkbar angebracht ist, die senkrecht zu der sich längs erstreckenden Mittelachsenebene ist, wobei die Welle Kegelradpaare (62, 68) betätigt, die die Verbindungseinrichtung des zweiten Stabs mit den hinteren Stäben (40) und gleichzeitig die einzige gegenseitige Verbindung derselben hinteren Stäbe an ihren oberen Endabschnitten (47) sind, so dass eine Winkelversetzung des zweiten Stabs (20) nach vorn relativ zu dem ersten Stab (10) entlang der sich längs erstreckenden Mittelachsenebene und um die Welle (64) außerdem bewirkt, dass sich die hinteren Stäbe (40) sowohl nach vorn als auch zu der Mittelachsenebene drehen, um so parallel zu dem ersten Stab gefaltet zu werden.

2. Kinderwagen gemäß Anspruch 1, wobei der vordere Stützpunkt, der zum Ruhen des Kinderwagens auf dem Boden vorgesehen ist, entweder ein Einfachrad oder ein Doppelrad (18) ist, das durch den ersten Stab (10) getragen wird.

3. Kinderwagen gemäß Anspruch 2, wobei das Einfachrad oder das Doppelrad (18) schwenkbar ist.

4. Kinderwagen gemäß Anspruch 1, wobei jeder der hinteren Stützpunkte, die zum Ruhen des Kinderwagens auf dem Boden vorgesehen sind, entweder ein Einfach- oder ein Doppelrad (48) sind, die dieselbe Achse teilen, wenn der Kinderwagen in der Konfiguration des regulären Gebrauches ist.

5. Kinderwagen gemäß Anspruch 1, wobei der Kinderwagenschubpunkt, der an dem zweiten Stab (20) vorgesehen ist, aus einer Rohrverbindung (24) besteht, die an einem geradlinigen Rohr (32) gekoppelt ist, das ein Teil einer Griffstange (30) ist, wobei die Griffstange um eine Achse nach vorn geneigt werden kann, die sich senkrecht zu der sich längs erstreckenden Mittelachsenebene des Kinderwagens erstreckt, wenn der Rahmen nicht in seiner vollständig offenen Konfiguration ist.

6. Kinderwagen gemäß Anspruch 1, wobei jedes der Kegelradpaare Folgendes aufweist:
- ein erstes Zahnrad (62), das an der Welle (64) angebracht ist, die die Winkelversetzung des zweiten bewegbaren Stabes (20) ermöglicht, und
- ein zweites Zahnrad (68), das an einer zweiten Welle (72) angebracht ist, die sich senkrecht zu den hinteren Stäben (40) erstreckt und an dem oberen Endabschnitt (47) der hinteren Stäbe (40) starr angebracht ist,
so dass sich die Achsen der zweiten Wellen (72) der zweiten Zahnräder (68) einander an einem Punkt kreuzen, der an der Mittelachsenebene des Kinderwagens unter der Welle (64) der ersten Zahnräder (62) entlang des stationären mittleren Stabes (10) liegt.

7. Kinderwagen gemäß Anspruch 1, **gekennzeichnet durch** eine Verriegelungsvorrichtung (101; 200), die dazu eingerichtet ist, zu verhindern, dass der Rahmen irgendeine andere Konfiguration außer seiner vollständig offenen und vollständig geschlossenen Konfiguration annimmt.

8. Kinderwagen gemäß Anspruch 7, wobei die Verriegelungsvorrichtung (101; 200) Teile aufweist, die identisch sind, auch wenn sie an beiden Seiten der Mittelachsenebene des Rahmens spiegelverkehrt sind.

9. Kinderwagen gemäß Anspruch 8, wobei an jeder Seite der Mittelachsenebene des Rahmens die Verriegelungsvorrichtung Folgendes aufweist:
■ ein hohles Gehäuse (201),
■ einen Gleitstift (202), der einen ersten Abschnitt, welcher mit einer Vorspannfeder verknüpft ist, einen Halbkugelkopf (209), der an einer geneigten Ebene (205) im Inneren des hohlen Gehäuses (201) anliegt, und einen zweiten Abschnitt aufweist, der von demselben hohlen Gehäuse (201) vorsteht und dazu geeignet ist, wahlweise mit Querlöchern (27, 29) in Eingriff zu gelangen, die an dem Endabschnitt (28) des zweiten bewegbaren Stabs (20) vorgesehen sind, der jenem gegenüber liegt, der den Schubpunkt (24) des Kinderwagens trägt, und zwar an beiden Seiten eines Loches (25), das für die Welle (64) desselben zweiten bewegbaren Stabs (20) vorgesehen ist, um damit in Eingriff zu gelangen.

10. Kinderwagen gemäß Anspruch 9, wobei die Verriegelungsvorrichtung dazu eingerichtet ist, manuell gelöst zu werden, wenn der Rahmen in seine vollständig geschlossene Konfiguration gefaltet wird, indem ein zurückziehbares Griffelement (207) in einer Richtung betätigt wird, die jener Richtung entgegengesetzt ist, in der der Kinderwagen geschoben wird, wenn er im regulären Gebrauch ist.

11. Kinderwagen gemäß Anspruch 7, wobei die Verriegelungsvorrichtung (101) ein Verriegelungselement (106) aufweist, das wahlweise in Sitze (102, 104) einfügbar ist, die in einem Drehkörper (128) vorgesehen sind, welcher im Inneren eines Gehäuses (150) schwenkt und mit dem zweiten Stab (20) fest in Eingriff ist.

12. Kinderwagen gemäß Anspruch 11, wobei das Verriegelungselement (106) ein Stift ist, der mit einem Hebel (110) im Eingriff ist, der im Inneren des Gehäuses (150) schwenkt und so angebracht ist, dass eine Drehung des Hebels (110) zu einer Versetzung des Stiftes (106) führt.

13. Kinderwagen gemäß Anspruch 12, **gekennzeichnet durch** eine elastische Einrichtung zum Schieben des Stiftes (106), um so seiner Entkopplung von einem der beiden Sitze (102, 104) entgegen zu wirken.

14. Kinderwagen gemäß einem der vorherigen Ansprüche, wobei alle Stäbe (10, 20, 30, 40) gradlinige, röhrenartige Elemente aufweisen, vorzugsweise aus einer Aluminiumlegierung.

## Revendications

1. Poussette comprenant un châssis qui est convertible d'une configuration complètement ouverte pour l'utilisation régulière à une configuration complètement pliée pour la ranger lorsqu'elle n'est pas utilisée, dans laquelle ledit châssis comprend :
une première barre (10) se trouvant sur et s'étendant le long d'un plan axial de la poussette, une première partie d'extrémité (12) de la première barre (19) étant prévue avec un point de support avant (18) de la poussette ;
une paire de barres arrière (40) comprenant une partie d'extrémité supérieure et une partie d'extrémité inférieure (47, 42), les barres :
divergeant vers l'arrière à partir des côtés opposés du plan axial longitudinal de la poussette lorsqu'elle est dans la configuration d'utilisation régulière,
sont adaptées pour se déplacer de manière angulaire par rapport à ladite première barre (10) afin de se déplacer vers l'avant lorsque le châssis est plié,
sont prévues au niveau des parties d'extrémité inférieures (42) respectives, avec des points de support arrière (48) pour la poussette ;
une deuxième barre (20) se trouvant sur et s'étendant le long du plan axial longitudinal de la poussette et présentant :
un point de poussée de poussette (24) au niveau d'une première partie d'extrémité de ladite deuxième barre (20), et
des moyens de raccordement avec lesdites barres arrière (40) au niveau d'une deuxième partie d'extrémité (28), **caractérisée en ce que** :
au niveau de ladite deuxième partie d'extrémité (28) de ladite deuxième barre, ladite deuxième barre (20) est montée de manière pivotante sur une arbre (64) perpendiculaire au plan axial longitudinal, ledit arbre actionnant une paire d'engrenages coniques (62, 68) qui sont les moyens de raccordement de ladite deuxième barre avec les barres arrière (40) et en même temps le seul raccordement mutuel des mêmes barres arrière au niveau de leurs parties d'extrémité supérieures (47), de sorte qu'un déplacement angulaire vers l'avant de ladite deuxième barre (20) par rapport à ladite première barre (10) le long d'un plan axial longitudinal et autour dudit arbre (64) amène également les barres arrière (40) à tourner à la fois vers l'avant et vers le plan axial, afin d'être pliées parallèlement à la première barre.

2. Poussette selon la revendication 1, dans laquelle le point de support avant prévu pour que la poussette repose sur le sol, est une roue unique ou une roue jumelée (18) supportée par ladite première barre (10).

3. Poussette selon la revendication 2, dans laquelle ladite roue unique ou la roue jumelée (18) est pivotante.

4. Poussette selon la revendication 1, dans laquelle chacun des points de support arrière prévus pour que la poussette repose sur le sol est une roue unique ou une roue jumelée (48), qui partage le même axe lorsque la poussette est dans la configuration d'utilisation régulière.

5. Poussette selon la revendication 1, dans laquelle le point de poussée de poussette prévu sur ladite deuxième barre (20) se compose de raccordement de tube (24) couplé à un tube rectiligne (32) qui fait partie d'une poignée (30), la poignée étant inclinable vers l'avant autour d'un axe s'étendant perpendiculairement au plan axial longitudinal de la poussette lorsque le châssis n'est pas dans sa configuration complètement ouverte.

6. Poussette selon la revendication 1, dans laquelle chacune desdites paires d'engrenages coniques comprend :
un premier engrenage (62) monté sur ledit arbre (64) qui permet le déplacement angulaire de ladite deuxième barre mobile (20), et
un deuxième engrenage (68) monté sur un deuxième arbre (72) s'étendant perpendiculairement aux barres arrière (40) qui sont fixées de manière rigide à la partie d'extrémité supérieure (47) desdites barres arrière (40),
de sorte que les axes desdits deuxièmes arbres (72) desdits deuxièmes engrenages (68) se croisent à un point se trouvant sur le plan axial de la poussette au-dessous de l'arbre (64) des premiers engrenages (62) le long de ladite barre centrale fixe (10).

7. Poussette selon la revendication 1, **caractérisée en ce qu'**elle comprend un dispositif de blocage (101 ; 200) agencé pour empêcher le châssis de prendre n'importe quelle configuration différente de ses configurations complètement ouverte et complètement fermée.

8. Poussette selon la revendication 7, dans laquelle ledit dispositif de blocage (101 ; 200) comprend des parties qui sont identiques, bien qu'inversées à la manière d'un miroir, des deux côtés du plan axial du châssis.

9. Poussette selon la revendication 8, dans laquelle, de chaque côté du plan axial du châssis, ledit dispositif de blocage comprend:
un boîtier creux (201),
une broche coulissante (202) ayant sa première partie associée à un ressort de sollicitation et une tête hémisphérique (209) venant en butée contre un plan incliné (205) à l'intérieur dudit boîtier creux (201), et sa deuxième partie qui fait saillie à partir du même boîtier creux (201) et est adaptée pour se mettre en prise sélectivement dans des trous transversaux (27, 29) qui sont prévus au niveau de la partie d'extrémité (28) de ladite deuxième barre mobile (20) qui est à l'opposé de celle qui supporte le point de poussée (24) de la poussette, des deux côtés d'un trou (25) prévu pour l'arbre (64) de ladite même deuxième barre mobile (20) pour pouvoir s'y mettre en prise.

10. Poussette selon la revendication 9, dans laquelle ledit dispositif de blocage est agencé pour être débloqué manuellement, lorsque le châssis est plié dans sa configuration complètement fermée, en actionnant un élément de poignée rétractable (207) dans une direction qui est opposée à la direction dans laquelle la poussette est poussée lorsqu'elle est utilisée normalement.

11. Poussette selon la revendication 7, dans laquelle ledit dispositif de blocage (101) comprend un élément de blocage (106) pouvant être sélectivement inséré dans des sièges (102, 104) prévus dans un corps rotatif (128) qui pivote à l'intérieur d'un boîtier (150) et est fermement mis en prise avec la deuxième barre (20).

12. Poussette selon la revendication 11, dans laquelle ledit élément de blocage (106) est une broche mise en prise avec un levier (110) pivotant à l'intérieur du boîtier (150), monté de sorte qu'une orientation du levier (110) se traduit par un décalage de la broche (106).

13. Poussette selon la revendication 12, **caractérisée en ce qu'**elle comprend des moyens élastiques pour pousser la broche (106) afin de s'opposer à son dégagement de l'un des deux sièges (102, 104).

14. Poussette selon l'une quelconque des revendications précédentes, dans laquelle la totalité desdites barres (10, 20, 30, 40) est composée d'éléments tubulaires rectilignes, de préférence réalisés avec un alliage d'aluminium.
